Europäisches Patentamt

European Patent Office

Office européen des brevets

(19)

(11) Numéro de publication: **0 243 226 B1**

(12) **FASCICULE DE BREVET EUROPEEN**

(45) Date de publication du fascicule du brevet:
**23.08.89**

(51) Int. Cl.⁴: **G01F 15/00**, G01F 15/14, F16B 41/00

(21) Numéro de dépôt: **87400701.6**

(22) Date de dépôt: **31.03.87**

(54) Dispositif pour rendre inviolable un compteur volumétrique.

(30) Priorité: **21.04.86 FR 8605683**

(43) Date de publication de la demande:
**28.10.87 Bulletin 87/44**

(45) Mention de la délivrance du brevet:
**23.08.89 Bulletin 89/34**

(84) Etats contractants désignés:
**BE CH DE ES GB IT LI LU NL**

(56) Documents cités:
**GB-A- 2 075 691**
**GB-A- 2 087 020**
**US-A- 3 164 300**
**US-A- 4 471 982**

(73) Titulaire: **SAPPEL Société Anonyme française, 67, rue du Rhône, F-68304 Saint-Louis(FR)**

(72) Inventeur: **Robitaille, Thierry, 18, rue de la Sinne, F-68200 Mulhouse(FR)**

(74) Mandataire: **Cuer, André, CABINET CUER 30, rue de Léningrad, F-75008 Paris(FR)**

ACTORUM AG

## Description

La présente invention a trait au domaine des dispositifs permettant de sceller ou protéger contre la fraude les systèmes de mesure ou contrôle. Elle concerne tout spécialement un moyen d'inviolabilité de compteur volumétrique (voir par exemple GB-A 2 087 020 et GB-A 2 075 691).

Les compteurs volumétriques, comme par exemple les compteurs d'eau comportent, dans la partie supérieure de leur corps cylindrique -au sein duquel sont introduits les moyens de mesure dont le totalisateur- une bague de fermeture sous la forme d'un écrou fileté qui est muni d'un système d'inviolabilité, généralement du type plomb de sécurité, destiné à contrôler la fraude.

Malgré ces précautions, les garanties s'avèrent souvent insuffisantes et les vérifications ou releveurs de compteurs sont fréquemment amenés à assurer des interventions de remise en état des systèmes de scellement et des écrous de blocage qui assurent la fermeture des boitiers de compteurs.

L'invention a pour but de pallier ces inconvénients et propose à cet effet un capuchon, avec couvercle, pour compteur volumétrique, destiné non seulement à assurer une fonction de scellement contre la fraude mais permettant en outre d'une part d'assurer un habillage de protection pour le compteur et, d'autre part, grâce à la conception de sa structure interne, d'orienter le cadran de lecture vers l'utilisateur lors d'un relevé.

Le nouveau dispositif selon l'invention, de type capuchon, est essentiellement constitué par la combinaison : a) d'une jupe cylindrique munie sur la face interne de son bord supérieur d'une série d'évidements régulièrement espacés sur le pourtour et prolongés verticalement, à l'aplomb de la jupe, par des crochets aptes à s'enclencher dans l'épaulement de l'écrou fileté de blocage, conventionnel, pour le compteur ; b) d'une bague à lèvre verticale interne dont les ergots en saillie de la collerette viennent s'insérer dans lesdits évidements ; et c) d'un couvercle dont la charnière d'ouverture-fermeture est articulée dans une ouverture pratiquée sur ledit bord supérieur de la jupe.

La base des ergots ou partie crochetée proprement dite est destinée à assurer un verrouillage sur toute la périphérie de l'écrou fileté du compteur alors que la bague sert à entraîner en rotation le totalisateur du compteur grâce à sa lèvre interne.

Selon une caractéristique importante du dispositif, l'un des dits crochets est fragilisé au niveau du poinçon de contrôle SIM (Service des Instruments et Mesures) qui est apposé sur la tête dudit crochet, au niveau du bord supérieur de la jupe. Ainsi, lors d'une forte traction sur le couvercle ou sur la bague de fermeture, le crochet poinçonné peut se briser, ce qui permet de détecter la tentative de fraude sans nuire pour autant à l'inviolabilité du compteur.

D'autres caractéristiques apparaitront dans la description qui suit, relative à un mode de réalisation non limitatif illustré par les dessins annexés qui représentent schématiquement :

- Figure 1 : une vue de dessus, légèrement en perspective d'un capuchon conforme à l'invention, avec son couvercle soulevé ;
- Figure 2 : une vue en coupe, plus détaillée, montrant les caractéristiques structurelles du dispositif selon l'invention.

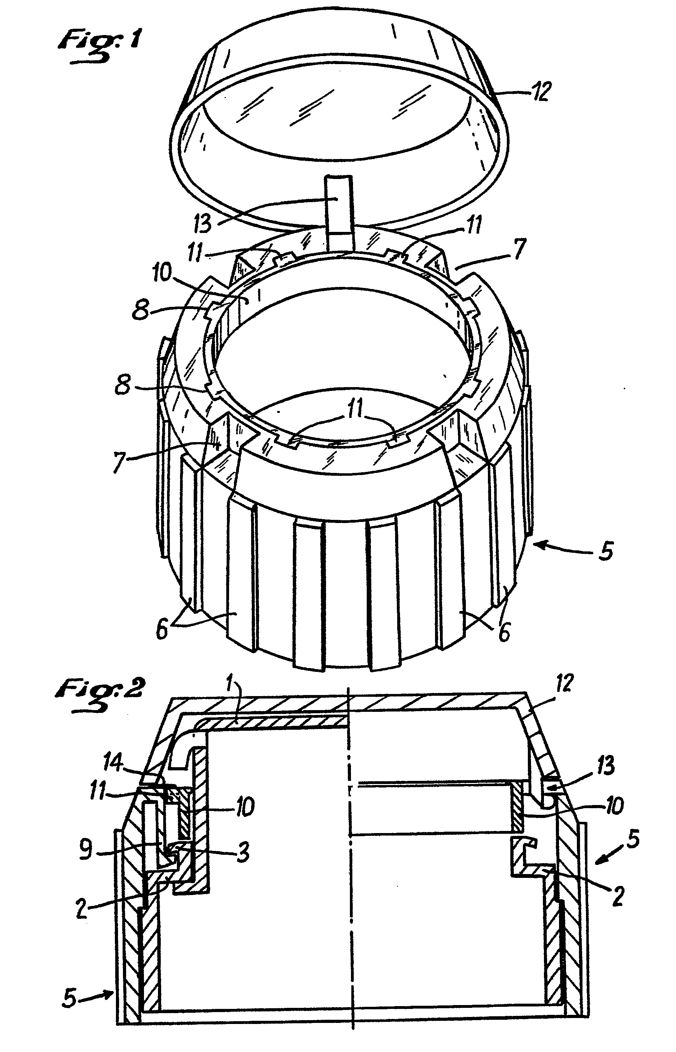

On notera que, sur cette figure 2, seule la partie gauche reproduit intégralement les éléments du compteur proprement dit (lequel ne fait pas partie de l'invention) dont, essentiellement, le verre du totalisateur interne 1 et l'écrou fileté 2 de blocage assurant la fermeture du compteur. Un petit épaulement 3 ou saignée est pratiqué dans la partie supérieure de cet écrou pour permettre le verrouillage des crochets comme il sera expliqué plus loin. En outre, la partie plane à la base de l'écrou 2 est généralement enduite de graisse lors de la pose du capuchon de l'invention.

Conformément aux figures, le dispositif de protection selon l'invention comporte un habillage extérieur ou jupe 5, pouvant comporter des cannelures externes 6, dont le bord supérieur, avantageusement échancré (7), est muni de séries d'évidements 8 répartis sur le pourtour. La paroi interne de ces évidements est prolongée verticalement par des crochets 9 qui seront destinés, par leur base recourbée, à venir se verrouiller sur le pourtour de la saignée pratiquée, comme dit ci-dessus, sur l'écrou de blocage du compteur proprement dit.

Une bague à lèvre interne verticale 10, apte à entraîner en rotation le totalisateur 1 du compteur, est munie d'une collerette supérieure dont les ergots 11 en saillie viennent s'enclencher dans les évidements 8 du bord supérieur de la jupe. Au niveau des échancrures 7 de ce bord supérieur sont prévues des entretoises internes (non visibles sur les figures) qui servent de moyens de retenue vers le bas de la collerette de la bague.

Le dispositif comprend en outre un couvercle 12 apte à adopter une position totalement ouverte (figure 1) à la verticale ou fermée (figure 2) grâce à une charnière à articulation 13 constituée par une patte faisant corps avec le couvercle et dont la base allongée est retenue prisonnière dans une ouverture pratiquée sur le bord supérieur de la jupe.

Selon une autre caractéristique, un poinçon de contrôle SIM (voir ci-avant), indiqué par 14 sur la partie gauche de la figure 2, est apposé au niveau de l'un des évidements 8, cet évidement correspondant à un crochet 9 sous-jacent plus fragile que les autres, de sorte qu'il puisse se briser en cas de tentative de fraude.

Avantageusement, toutes les pièces du dispositif de type capuchon selon l'invention sont réalisées en matière plastique moulée ou injectée, l'ensemble constituant un objet unitaire facile à poser et fermement assujetti au corps du compteur volumétrique après verrouillage des crochets 9 sur la partie supérieure de l'écrou fileté 2 serré sous fort vissage sur le compteur.

## Revendications

1. Dispositif destiné à rendre inviolable et, simultanément, à habiller un compteur volumétrique du type compteur à eau ou analogue, caractérisé en ce qu'il est constitué par la combinaison:

a) d'une jupe cylindrique (5) munie sur la face interne de son bord supérieur d'une série d'évidements (8) régulièrement espacés sur le pourtour et prolongés verticalement, à l'aplomb de la jupe, par des crochets (9) aptes à s'enclencher dans l'épaulement (3) de l'écrou fileté de blocage (2) conventionnel pour le compteur;

b) d'une bague à lèvre verticale interne (10) dont les ergots (11) en saillie de la collerette viennent s'insérer dans lesdits évidements (8) ; et

c) d'un couvercle (12) dont la charnière d'ouverture-fermeture (13) est articulée dans une ouverture pratiquée sur ledit bord supérieur de la jupe.

2. Dispositif selon la revendication 1, caractérisé en ce que l'un des crochets (9) correspondant à un poinçon de contrôle (14) apposé au niveau de l'évidement (8) surplombant ledit crochet, est prévu plus fragile que les autres, de façon à déceler la fraude en cas de forte traction sur le couvercle (12) ou la bague (10).

3. Dispositif selon l'une quelconque des revendications 1,2, caractérisé en ce que le bord supérieur de la jupe (5) est muni d'échancrures(7) sous lesquelles, au sein de la jupe, sont prévues des entretoises qui retiennent vers le bas la collerette de la bague (10).

4. Dispositif selon l'une quelconque des revendications 1 à 3, caractérisé en ce que l'ensemble des pièces est réalisé en matière plastique moulée ou injectée.

## Patentansprüche

1. Einrichtung zur Absicherung und gleichzeitig zum Zudecken eines volumetrischen Wasserbehälters oder eines Zählers ähnlicher Art, dadurch gekennzeichnet, daß sie durch die Kombination von:

(a) einer zylindrischen Umfangshülse (5), deren Innenwandung der oberen Kante mit einer Reihe von Öffnungen (8) versehen ist, die regelmässig am Umfang verteilt und in vertikaler Richtung senkrecht zur Hülse durch Haken (9) verlängert sind, die geeignet sind, mit der Schulter (3) einer mit Gewinde versehenen, bei Zählern an sich bekannten Kontermutter (2) in Eingriff zu bekommen,

(b) einem eine innere vertikale Lippe (10) aufweisenden Ring, wobei deren am Bund vorspringenden Nocken (11) in die Öffnungen (8) zu liegen kommen, und

(c) einen Deckel (12), dessen Öffnungs- und Schliessungsscharnier (13) mit einer Öffnung der genannten oberen Kante der Hülse in Eingriff steht, gebildet ist.

2. Einrichtung nach Anspruch 1, dadurch gekennzeichnet, daß einer der Haken (9), der einem Steuergriff entspricht (14) und auf der Höhe der Öffnung (8) vertikal oberhalb des Hakens angeordnet ist, weniger stabil als die anderen ausgeführt ist, so daß Betrug vereitelt wird, und zwar bei einer auf den Deckel (12) oder den Ring (10) ausgeübter erheblicher Zugkrafteinwirkung.

3. Einrichtung nach einem der Ansprüche 1 und 2, dadurch gekennzeichnet, daß die obere Kante der Hülse (5) mit Spalten (7) versehen ist, unterhalb deren innerhalb der Hülse Zwischenstücke angebracht sind, die den Bund des Ringes (10) zurückhalten.

4. Einrichtung nach einem der Ansprüche 1 bis 3, dadurch gekennzeichnet, daß alle Teile davon in gespritztem oder geformten Kunststoff hergestellt sind.

## Claims

1. Device for making tamperproof and covering a flowmeter of the type watermeter or similar, characterized by combining:

a) a cylindric skirt (5) having a series of recesses (8) regularly spaced on the periphery of an upper edge of an inside face thereof and extended vertically downwardly, perpendicular to the skirt (5), by hooks (9) able to engage with the shoulder (3) of the standard threaded lock nut (2) of the flowmeter;

b) a ring with an inside vertical lip (10) with externally projecting pins (11) engaging with said recesses (8); and

c) a cover (12) with an opening and closing hinge (13) pivoted in an opening made in said upper edge of the skirt.

2. Device according to claim 1, wherein one of the hooks (9) corresponding to a check point (14) provided at the level of recesses (8) overhanging the said hook, is provided to be more fragile than the others, to detect fraud in case of strong traction on the cover (12) of the ring (10).

3. Device according to any one of claims 1 or 2, wherein the upper edge of the skirt (5) is provided with notches (7) under which, in the skirt, are provided braces which hold the collar (10) of the ring downward.

4. Device according to any one of claims 1 to 3, wherein the all the constituents are made of molded or injected plastic material.

*Fig. 1*

*Fig. 2*